(19) Europäisches Patentamt / European Patent Office / Office européen des brevets

(11) **EP 4 411 886 A1**

(12) **EUROPEAN PATENT APPLICATION**
published in accordance with Art. 153(4) EPC

(43) Date of publication:
**07.08.2024 Bulletin 2024/32**

(51) International Patent Classification (IPC):
**H01M 4/505** (2010.01)    **H01M 4/525** (2010.01)
**C01D 15/02** (2006.01)

(21) Application number: **23817282.9**

(52) Cooperative Patent Classification (CPC):
Y02E 60/10

(22) Date of filing: **14.08.2023**

(86) International application number:
**PCT/CN2023/112871**

(87) International publication number:
**WO 2024/131093 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2022 CN 202211638986**

(71) Applicant: **Tianjin B&M Science And Technology Co., Ltd.**
**Tianjin 300384 (CN)**

(72) Inventors:
• **LI, Honglei**
  **Tianjin 300384 (CN)**
• **TANG, Miao**
  **Tianjin 300384 (CN)**
• **ZHANG, Haitian**
  **Tianjin 300384 (CN)**
• **JI, Changyin**
  **Tianjin 300384 (CN)**
• **LV, Fei**
  **Tianjin 300384 (CN)**
• **XU, Ning**
  **Tianjin 300384 (CN)**

(74) Representative: **Ström & Gulliksson AB**
**Box 5275**
**102 46 Stockholm (SE)**

(54) **LITHIUM-RICH LAYERED OXIDE MATERIAL, PREPARATION METHOD THEREFOR, AND USE THEREOF**

(57) The present disclosure belongs to the field of battery materials, and in particular relates to a lithium-rich layered oxide material and preparation method therefor and application thereof. Primary particles of the lithium-rich layered oxide material according to the present disclosure are polyhedrons with an exposed {010} crystal plane, and an area of the {010} crystal plane accounts for >20%. In the present disclosure, by introducing a design of multiple cationic component with a high entropy into the LLO material, the configurational entropy of the system is improved, thereby providing the material with a high structural stability and a stable ion diffusion channel; at the same time, the changes in entropy further affect the thermodynamically stable structure and crystal plane energy of the system, achieve local minimization of Gibbs free energy, and induce the exposure of the {010} crystal plane with a fast lithium ion transport channel, which provides more channels for rapid ion migration and improves electrode reaction kinetics. Experimental results show that the lithium-rich layered oxide material according to the present disclosure has a high rate performance and a long cycle stability when used as a cathode material of a lithium battery.

FIG. 3

EP 4 411 886 A1

**Description**

This application claims priority to Chinese Patent Application No. 202211638986.6, titled "LITHIUM-RICH LAYERED OXIDE MATERIAL AND PREPARATION METHOD THEREFOR AND APPLICATION THEREOF", filed on December 20, 2022 with the China National Intellectual Property Administration, which is incorporated herein by reference in its entirety.

**FIELD**

The present disclosure relates to the field of battery material and in particular to a lithium-rich layered oxide material and preparation method therefor and application thereof.

**BACKGROUND**

The rapid development of new energy vehicles in recent years has put forward higher requirements for energy density, cycle life and power density of lithium secondary batteries. Cathode material is a key factor in the breakthrough of the performance of the lithium secondary batteries. Cathode materials of lithium-rich layered oxide (LLO) have a high specific capacity of more than 250 mAh/g, a high operating voltage of 4.8 V, and low cost, and have attracted widespread attention from researchers. However, during the first charging process, the electrochemical activation of the electrochemically inert $Li_2MnO_3$ component not only brings high capacity and energy density, but also causes changes in the structure of the surface of the material. These changes are manifested by the migration of transition metal ions, lattice dislocation, and a generation and transfer of oxygen vacancies, leading to slow lithium-ion dynamics and severe battery capacity fading.

Generally, ion transport kinetics largely depends on the main structure and ion diffusion channels of the electrode material. A stable main structure can avoid the collapse of the crystal lattice and diffusion channels, and is conducive to the stable realization of reversible insertion and extraction of ions. Like traditional layered cathode materials, the deintercalation direction of the lithium ion of LLO materials is along the direction parallel to the (001) crystal plane, and thus has a material design of an exposed {010} crystal plane, including (010), (110), (100), (0-10), (1-10) and (-100) planes, which can reduce the barrier of the deintercalation of Li and increase the diffusion speed of the lithium ion. However, relevant studies have shown that the {010} crystal plane in the LLO materials has a higher surface energy, and have a growth speed greater than that of the crystal plane with a low surface energy, and eventually disappear during the crystal growth process. Therefore, the synthesis of the LLO materials with an exposed crystal plane with special advantageous is still a difficulty.

High-entropy materials are a type of single-phase materials proposed in recent years that contain five or more elements and are solidly dissolved with each other in equimolar or near molar ratios, which exhibit outstanding performance in terms of thermodynamics, kinetics, microstructure, and properties, namely high entropy effect, hysteresis diffusion effect, lattice distortion effect, and the like. Therefore, it is of great significance to combine the component design advantages of the high-entropy materials, optimize structural characteristics of the LLO layered materials, and develop cathode materials of lithium battery with high rate and long life.

**SUMMARY**

In view of this, the present disclosure aims to provide a lithium-rich layered oxide material and preparation method therefor and application thereof. The {010} crystal plane of the lithium-rich layered oxide material according to the present disclosure is exposed in a large area and has a higher rate performance and a higher cycle life when used as the cathode material of lithium battery.

The present disclosure provides a lithium-rich layered oxide material. Primary particles of the lithium-rich layered oxide material are polyhedrons with an exposed {010} crystal plane, and an area of the {010} crystal plane accounts for >20%.

Preferably, the area of the {010} crystal plane accounts for 30% to 45%.

Preferably, the lithium-rich layered oxide material has a configurational entropy value of 6.0 to 9.0.

Preferably, the lithium-rich layered oxide material has a chemical formula of $Li(Li_aNa_bMn_cNi_dCo_eM_f)O_2$, wherein M is one or more of Mg, B, Al, Ti, Zr, Nb, Mo and W, $0< a \leq 0.3$, $0<b \leq 0.05$, $0.4<c \leq 0.7$, $d>0$, $e>0$, $f>0$, and $a+b+c+d+e+f=1$.

The present disclosure provides a method for preparing a lithium-rich layered oxide material, comprising following steps:

preparing a manganese nickel cobalt hydroxide precursor, mixing the manganese nickel cobalt hydroxide precursor, a lithium source compound, a sodium source compound and an M source compound, and calcining the mixture under an oxygen condition to obtain a lithium-rich layered oxide material;

M in the M source compound is one or more of Mg, B, Al, Ti, Zr, Nb, Mo and W;

primary particles of the lithium-rich layered oxide material are polyhedrons with an exposed {010} crystal plane, and an area of the {010} crystal plane accounts for > 20%.

Preferably, the specific steps of preparing the manganese nickel cobalt hydroxide precursor comprises:

a) mixing a soluble salt of manganese, a soluble salt of nickel, a soluble salt of cobalt and water to obtain a mixed salt solution;

b) mixing the mixed salt solution, a sodium hydroxide and a complexing agent, and controlling the amounts of the sodium hydroxide and the complexing agent to maintain the pH value of the mixed system at 10 to 13 to perform a complexation and precipitation reaction to obtain a precipitate;

c) washing and drying the precipitate to obtain a manganese nickel cobalt hydroxide precursor.

Preferably, the specific steps satisfy at least one of the following conditions.

The soluble salt of manganese is one or more of manganese sulfate, manganese chloride and manganese nitrate.

The soluble salt of nickel is one or more of nickel sulfate, nickel chloride and nickel nitrate.

The soluble salt of cobalt is one or more of cobalt sulfate, cobalt chloride and cobalt nitrate.

The complexing agent is one or more of ammonia water, ethylenediaminetetraacetic acid and ethylenediamine.

A total concentration of the metal ions in the mixed salt solution is 1mol/L to 3mol/L.

The sodium hydroxide is mixed in the form of an aqueous solution of the sodium hydroxide, and a concentration of the aqueous solution of the sodium hydroxide is 0.5mol/L to 3mol/L.

The complexing agent is mixed in the form of an aqueous solution of the complexing agent, and a concentration of the aqueous solution of the complexing agent is 1mol/L to 10mol/L.

A stirring rate of the complexation and precipitation reaction is 200 r/min to 800r/min.

A temperature of the complexation and precipitation reaction is 30 °C to 70 °C.

A duration of the complexation and precipitation reaction is 10 h to 50 h.

Preferably, the lithium source compound is one or more of LiOH, $Li_2CO_3$, $Li_2SO_4$, LiCl and $LiNO_3$; the sodium source compound is $Na_2CO_3$ and/or $NaHCO_3$; the M source compound is one or more of oxide of M, hydroxide of M, carbonate of M and sulfate of M.

Preferably, the calcining is a step-by-step calcining, comprising the following specific steps:

i) raising the temperature from an ambient temperature to a first calcining temperature and performing a first thermal insulation calcining;

wherein the first calcining temperature is 300 °C to 600 °C; a heating rate to the first calcining temperature is 1 °C/min to 5 °C/min; a duration of the first thermal insulation calcining is 2 h to 8 h;

ii) continuing to raise the temperature to a second calcining temperature and performing a second thermal insulation calcining;

wherein the second calcining temperature is 800 °C to 1000 °C; a heating rate to the second calcining temperature is 1 °C/min to 5 °C/min; a duration of the second thermal insulation calcining is 10 h to 20 h;

wherein during the process of calcining, an oxygen-containing gas is continuously introduced into the used calcining equipment, an inlet rate of the oxygen-containing gas in step i) is 0.5 $m^3$/h to 5 $m^3$/h, and an inlet rate of the oxygen-containing gas in step ii) is 0.5 $m^3$/h to 5 $m^3$/h.

The present disclosure provides a lithium ion secondary battery, wherein a cathode material of the lithium ion secondary battery comprises the lithium-rich layered oxide material described in the above technical solution or the lithium-rich layered oxide material prepared by the preparation method described in the above technical solution.

The present disclosure provides an electrical device equipped with the lithium ion secondary battery described in the above technical solution.

Compared with the conventional technology, the present disclosure provides a lithium-rich layered oxide material and preparation method therefor and application thereof. Primary particles of the lithium-rich layered oxide material according to the present disclosure are polyhedrons with an exposed {010} crystal plane, and an area of the {010} crystal plane accounts for >20%. In the present disclosure, by introducing a design of multiple cationic components with a high entropy into the LLO material, the configurational entropy of the system is improved, thereby providing the material with a high structural stability and a stable ion diffusion channel; at the same time, the changes in entropy further affect the thermodynamically stable structure and crystal plane energy of the system, achieve local minimization of Gibbs free energy, and induce the exposure of the {010} crystal planes with a fast lithium ion transport channel, so that the area of the {010} crystal plane accounts for >20%, which provides more channels for rapid ion migration and improves electrode reaction kinetics. The lithium-rich layered oxide material provided in the present disclosure has a high rate performance and a long cycle stability when used as a cathode material of a lithium battery, and has good application prospects in a manufacturing field of lithium secondary battery.

## BRIEF DESCRIPTION OF THE DRAWINGS

In order to explain examples of the present disclosure or the technical solutions in the conventional technology more clearly, the drawings needed to be used in the description of the examples or the conventional technology will be briefly introduced below. Obviously, the drawings in the following description are only examples of the present disclosure. For those of ordinary skill in the art, other drawings can be obtained based on the provided drawings without exerting creative efforts.

Figure 1 is an XRD pattern of the lithium-rich layered oxide material in Example 1 according to the present disclosure;

Figure 2 is an HRTEM and fast Fourier transform diagram of the lithium-rich layered oxide material of Example 1 according to the present disclosure;

Figure 3 is an SEM image of the lithium-rich layered oxide material and a schematic diagram of the structure of the primary particle in Example 1 according to the present disclosure;

Figure 4 is a comparison chart of the cycle performance of the oxide materials prepared in Example 1, Comparative Example 1 and Comparative Example 2 in lithium secondary battery tests according to the present disclosure;

Figure 5 is a comparison chart of the rate performance of the oxide materials prepared in Example 1, Comparative Example 1 and Comparative Example 2 in lithium secondary battery tests according to the present disclosure.

## DETAILED DESCRIPTION OF EMBODIMENTS

The technical solutions in the examples of the present disclosure will be clearly and completely described below with reference to the accompanying drawings in the examples of the present disclosure. Obviously, the described examples are only some of the examples of the present disclosure, rather than all the examples. Based on the examples of the present disclosure, all other examples obtained by those skilled in the art without creative efforts fall within the scope of protection of the present disclosure.

In order to overcome shortcomings of existing LLO materials, the present disclosure provides a lithium-rich layered oxide material and preparation method therefor and application thereof. The core technical problem to be solved is that an irreversible phase change of the LLO material and the structural distortion and transition metal ion rearrangement caused by the anionic redox reactions lead to slow lithium ion transport kinetics, severe battery capacity fading and voltage fading. For this purpose, in the present disclosure, through the design of multiple cationic components with a high entropy, the configurational entropy of the system is improved, and the LLO material is provided with a high structural stability and a stable ion diffusion channel. At the same time, the changes in entropy can affect the energy and the crystal planes of the system, achieve local minimization of Gibbs free energy, induce the exposure of the {010} crystal plane with a fast lithium ion transport channel, so that the area of the {010} crystal plane accounts for >20%, thereby providing more channels for rapid ion migration and improving the electrode reaction kinetics.

It should be noted that the key difference between the technical solution of the present disclosure and the traditional metal ion-doped LLO material is that, in the present disclosure, a high-entropy solid solution is formed through a design of multiple cationic components, which can improve the configurational entropy of the system and induce the exposure of {010} crystal plane with fast lithium ion transport channels, thereby improving the electrochemical performance of the material; whereas traditional single metal ion doping or multiple metal ion doping improves the stability of the crystal structure through higher metal-oxygen bond energy and achieves the improvement of the electrochemical performance of the material.

The principle of the present disclosure is as follows.

The configurational entropy ($S_{config}$) in a multi-component material system mainly depends on the type of the elements and mole fraction thereof, and can be quantified according to the following formula:

$$S_{config} = -R\left[\left(\sum_{i=1}^{N} x_i \ln x_i\right)_{cation} + \left(\sum_{j=1}^{N} x_j \ln x_j\right)_{antion}\right] \quad (1).$$

In formula (1), $x_i$ and $x_j$ are mole fractions of cations and anions respectively, and R is a gas constant.

The surface energy of different exposed crystal planes in the material is generally related to the temperature, and the configurational entropy ($S_{config}$) and the vibrational entropy ($S_{vib}$) in the system, and can be expressed by the formula:

$$\gamma(T) = \gamma 0 - (T/A)(S_{config} + S_{vib}) \quad (2);$$

In formula (2), y0 is the surface energy of the material at 0 K, A is the Helmholtz free energy, and T is the temperature.

It can be seen from the above that the surface energy of the system with simple components and low entropy value is mainly affected by temperature, whereas the surface energy of the system with many components and high entropy value is mainly affected by the configurational entropy. In the present disclosure, through the control of multiple cationic components with a high entropy, a large area of exposure of the specific {010} crystal plane is achieved, thereby improving the stability and electrochemical performance of the structure of the electrode material.

In order to achieve the above objects, the present disclosure specifically proposes following technical solutions.

The present disclosure provides a lithium-rich layered oxide material, wherein primary particles of the lithium-rich layered oxide material are polyhedrons with an exposed {010} crystal plane, and the area of the {010} crystal plane accounts for >20%, preferably 30% to 45%, more preferably 35% to 40%, it specifically can be 36.4%, 37.0%, 37.2%, 37.5%, 37.4% or 38.3%.

In the present disclosure, the configurational entropy value of the lithium-rich layered oxide material is 6.0 to 9.0, specifically 6.0, 6.71, 7.45, 7.48, 7.80, 7.89, 8.85 or 9.0.

In the present disclosure, the lithium-rich layered oxide material preferably has a chemical formula of $Li(Li_aNa_b-Mn_cNi_dCo_eM_f)O_2$, wherein M is one or more of Mg, B, Al, Ti, Zr, Nb, Mo and W, $0<a\leq0.3$, $0<b\leq0.05$, $0.4<c\leq0.7$, $d>0$, $e>0$, $f>0$, and $a+b+c+d+e+f=1$.

In one embodiment according to the present disclosure, the lithium-rich layered oxide material specifically has any one of the following chemical formulas:

$$Li(Li_{0.18}Na_{0.02}Ni_{0.1552}Co_{0.0776}Mn_{0.5432}Al_{0.008}Ti_{0.016})O_2;$$

$$Li(Li_{0.14}Na_{0.01}Ni_{0.20825}Co_{0.12495}Mn_{0.4998}Zr_{0.0170})O_2;$$

$$Li(Li_{0.14}Na_{0.01}Ni_{0.206125}Co_{0.123675}Mn_{0.4947}Mg_{0.0085}Ti_{0.017})O_2;$$

$$Li(Li_{0.19}Na_{0.01}Ni_{0.20825}Co_{0.20825}Mn_{0.4165}Ti_{0.0085}Zr_{0.0085})O_2;$$

$$Li(Li_{0.09}Na_{0.01}Ni_{0.2205}Co_{0.2205}Mn_{0.441}Nb_{0.009}Mo_{0.009})O_2;$$

$$Li(Li_{0.18}Na_{0.02}Ni_{0.1568}Co_{0.1568}Mn_{0.4704}Zr_{0.008}Ti_{0.008})O_2;$$

$$Li(Li_{0.14}Na_{0.01}Ni_{0.1649}Co_{0.1649}Mn_{0.4947}Al_{0.0085}Zr_{0.017})O_2.$$

The present disclosure also provides a method for preparing the lithium-rich layered oxide material in the above technical solution, comprising the following steps:

preparing a manganese nickel cobalt hydroxide precursor, mixing the manganese nickel cobalt hydroxide precursor, a lithium source compound, a sodium source compound and an M source compound, and calcining the mixture under an oxygen condition, to obtain a lithium-rich layered oxide material;

M in the M source compound is one or more of Mg, B, Al, Ti, Zr, Nb, Mo and W; and

primary particles of the lithium-rich layered oxide material are polyhedrons with exposed {010} crystal planes, and an area of the {010} crystal planes accounts for >20%.

In the preparation method according to the present disclosure, the specific steps of preparing the manganese nickel cobalt hydroxide precursor comprise:

a) mixing a soluble salt of manganese, a soluble salt of nickel, a soluble salt of cobalt and a water, to obtain a mixed salt solution;

b) mixing the mixed salt solution, a sodium hydroxide and a complexing agent, and controlling the amounts of the sodium hydroxide and the complexing agent to maintain the pH value of the mixed system at 10 to 13, to perform a complexation and precipitation reaction, to obtain a precipitate; and

c) washing and drying the precipitate to obtain the manganese nickel cobalt hydroxide precursor.

In the above-mentioned steps of preparing the manganese nickel cobalt hydroxide precursor according to the present disclosure, in step a), the soluble salt of manganese is preferably one or more of manganese sulfate, manganese chloride and manganese nitrate; the soluble salt of nickel is preferably one or more of nickel sulfate, nickel chloride and nickel nitrate; the soluble salt of cobalt is preferably one or more of cobalt sulfate, cobalt chloride and cobalt nitrate; the total concentration of metal ions in the mixed salt solution is preferably 1mol/L to 3mol/L, specifically 1mol/L, 1.5mol/L, 1.8mol/L, 2mol /L, 2.5mol/L or 3mol/L.

In the above-mentioned steps of preparing the manganese nickel cobalt hydroxide precursor according to the present disclosure, in step b), the sodium hydroxide is preferably mixed in the form of an aqueous solution of the sodium hydroxide, and the concentration of the aqueous solution of the sodium hydroxide is preferably 0.5mol/L to 3mol/L, specifically 0.5mol/L, 1mol/L, 1.5mol/L, 2mol/L, 2.5mol/L or 3mol/L; the complexing agent is preferably one or more of ammonia water, ethylenediaminetetraacetic acid (EDTA) and ethylenediamine; the complexing agent is mixed in the form of an aqueous solution of the complexing agent, and the concentration of the aqueous solution of the complexing agent is preferably 1mol/L to 10mol/L, specifically 1mol/L, 1.5mol/L, 2mol/L, 2.5mol/L, 3mol/L, 3.5mol/L, 4mol/L, 4.5mol/L, 5mol/L, 5.5mol/L, 6mol/L, 6.5mol/L, 7.5mol/L, 8mol/L, 8.5mol/L, 9mol/L, 9.5mol/L or 10 mol/L; and the mixing is preferably performed in a reaction kettle with water added as a base liquid.

In the above-mentioned steps of preparing the manganese nickel cobalt hydroxide precursor according to the present disclosure, in step b), the pH value of the mixed system can be maintained at 10, 10.1, 10.2, 10.3, 10.4, 10.5, 10.6, 10.7, 10.8, 10.9, 11, 11.1, 11.2, 11.3, 11.4, 11.5, 11.6, 11.7, 11.8, 11.9, 12, 12.1, 12.2, 12.3, 12.4, 12.5, 12.7, 12.8, 12.9 or 13; the stirring rate of the complexation and precipitation reaction is preferably 200r/min to 800r/min, specifically 200r/min, 250r/min, 300r/min, 350r/min, 400r/min, 450r/min, 500r/min, 550r/min, 600r/min, 650r/min, 700r/min, 750r/min or 800r/min; the temperature of the complexation and precipitation reaction is preferably 30 °C to 70 °C, specifically 30 °C, 35 °C, 40 °C, 45 °C, 50 °C, 55 °C, 56 °C, 60 °C, 65 °C or 70 °C; the duration of the complexation and precipitation reaction is preferably 10h to 50h, specifically 10h, 15h, 20h, 25h, 30h, 35h, 40h, 42h, 45h or 50h.

In the above-mentioned steps of preparing the manganese nickel cobalt hydroxide precursor according to the present disclosure, in step c), the temperature of drying is preferably 100 °C to 300 °C, specifically 100 °C, 110 °C, 120 °C, 130 °C, 140 °C, 150 °C, 160 °C, 170 °C, 180 °C, 190 °C, 200 °C, 210 °C, 220 °C, 230 °C, 240 °C, 250 °C, 260 °C, 270 °C, 280 °C, 290 °C or 300 °C.

In the preparation method according to the present disclosure, the lithium source compound is preferably one or more of LiOH, $Li_2CO_3$, $Li_2SO_4$, LiCl and $LiNO_3$; the sodium source compound is preferably $Na_2CO_3$ and/or $NaHCO_3$; the M source compound is preferably one or more of oxide of M, hydroxide of M, carbonate of M and sulfate of M.

In the preparation method provided by the present disclosure, the oxygen condition is preferably an air atmosphere or a pure oxygen atmosphere; the calcining is preferably a step-by-step calcining, and the specific process comprises:

i) raising the temperature from an ambient temperature to a first calcining temperature and performing a first thermal insulation calcining; and

ii) continuing to raise the temperature to a second calcining temperature and performing a second thermal insulation calcining.

In the above-mentioned calcining process according to the present disclosure, in step i), the first calcining temperature is preferably 300 °C to 600 °C, specifically 300 °C, 320 °C, 350 °C, 370 °C, 400 °C, 420 °C, 450 °C, 470 °C, 500 °C, 520 °C, 550 °C, 570 °C or 600 °C; the heating rate to the first calcining temperature is preferably 1 °C/min to 5 °C/min, specifically 1 °C/min, 1.5 °C/min, 2 °C/min, 2.5 °C/min, 3 °C/min, 3.5 °C/min, 4 °C/min, 4.5 °C/min or 5 °C/min; the duration of the first thermal insulation calcining is preferably 2 h to 8 h, specifically it can be 2h, 2.5h, 3h, 3.5h, 4h, 4.5h, 5h, 5.5h, 6h, 6.5h, 7h, 7.5h or 8h.

In the above-mentioned calcining process provided by the present disclosure, in step ii), the second calcining temperature is preferably 800 °C to 1000 °C, specifically 800 °C, 810 °C, 820 °C, 830 °C, 840 °C, 850 °C, 860 °C, 870 °C, 880 °C, 890 °C, 900 °C, 910 °C, 920 °C, 930 °C, 940 °C, 950 °C, 960 °C, 970 °C, 980 °C, 990 °C or 1000 °C; the heating rate to the second calcining temperature is preferably 1 °C/min to 5 °C/min, specifically 1 °C/min, 1.5 °C/min, 2 °C/min, 2.5 °C/min, 3 °C/min, 3.5 °C/min, 4 °C/min, 4.5 °C/min or 5 °C/min; the duration of the second thermal insulation calcining is preferably 10 to 20h, specifically 10h, 10.5h, 11h, 11.5h, 12h, 12.5h, 13h, 13.5h, 14h, 14.5h, 15h, 15.5h, 16h, 16.5h, 17h, 17.5h, 18h, 18.5h, 19h, 19.5h or 20h.

In the above-mentioned calcining process provided by the present disclosure, the oxygen condition is preferably achieved by continuously introducing oxygen-containing gas into the used calcining equipment; wherein, the inlet rate of the oxygen-containing gas in step i) is preferably $0.5m^3/h$ to $5m^3/h$, specifically, it can be $0.5 m^3/h$, $1 m^3/h$, $1.5 m^3/h$, $2 m^3/h$, $2.5 m^3/h$, $3 m^3/h$, $3.5 m^3/h$, $4 m^3/h$, $4.5 m^3/h$ or $5 m^3/h$; the inlet rate of the oxygen-containing gas in step ii) is preferably $0.5 m^3/h$ to $5 m^3/h$, specifically $0.5 m^3/h$, $1 m^3/h$, $1.5 m^3/h$, $2 m^3/h$, $2.5 m^3/h$, $3 m^3/h$, $3.5 m^3/h$, $4 m^3/h$, $4.5 m^3/h$ or $5 m^3/h$.

In the preparation method provided by the present disclosure, after the calcining is completed, the obtained product is preferably cooled, pulverized and sieved.

The present disclosure further provides a lithium ion secondary battery, comprising a positive electrode, a negative electrode, an electrolyte and a separator between the positive electrode and the negative electrode; wherein, the cathode material comprises the lithium-rich layered oxide material in the above-mentioned technical solution or the lithium-rich layered oxide material prepared by the preparation method in the above-mentioned technical solution.

The present disclosure further provides an electrical device equipped with the lithium ion secondary battery in the above-mentioned technical solution.

For greater clarity, detailed description is provided below through following examples and comparative examples.

Example 1

Nickel sulfate, cobalt sulfate, and manganese sulfate were weighed according to a molar ratio of Ni/Co/Mn of 20:10:70, and dissolved in a deionized water to prepare 2 mol/L of a mixed salt solution A. A NaOH solution B with a concentration of 2 mol/L and an ammonia water complexing agent solution C with a concentration of 2 mol/L were prepared. Deionized water was added to the reaction kettle as a base liquid. The solutions A, B, and C were simultaneously pumped into the reaction kettle for the complexation and precipitation reaction. The flow speed of the NaOH solution and ammonia water complexing agent solution was controlled so that the pH of the mixed solution in the reaction kettle was always maintained within a range of 11.5±0.05. The stirring speed of the mixed solution in the reaction kettle was set to 400 r/min, and the reaction temperature was 55 °C. After reacting continuously for 36 hours, the obtained precipitate was discharged, washed with deionized water and dried at a drying temperature of 150 °C to obtain a manganese nickel cobalt hydroxide precursor P.

1000 g of manganese nickel cobalt hydroxide precursor P, 610 g of lithium carbonate, 29.4 g of sodium carbonate, 11.3 g of aluminum oxide and 17.8 g of titanium dioxide were weighed, and mixed thoroughly using a high mixer to obtain a mixture Q.

The above-mentioned mixture Q was placed in an air atmosphere furnace for two-step calcining. The specific process was as follows. First, the furnace temperature was raised from room temperature to 550 °C at a heating rate of 3 °C/min, and the mixture Q was calcined at this temperature for 4 hours. During the process of heating and thermal insulation calcining, air was continuously introduced into the furnace at an air inlet rate of $2.5 m^3/h$. Then, the furnace temperature was continued to be raised to 900 °C at a heating rate of 3 °C/min, and the mixture Q was calcined at this temperature for 12h. During the process of heating and thermal insulation calcining, air was continuously introduced into the furnace at an air inlet rate of $2.5 m^3/h$.

After the calcining was completed, the product was cooled in the furnace, then pulverized and sieved to obtain a lithium-rich layered oxide material $Li(Li_{0.18}Na_{0.02}Ni_{0.1552}Co_{0.0776}Mn_{0.5432}Al_{0.008}Ti_{0.016})O_2$.

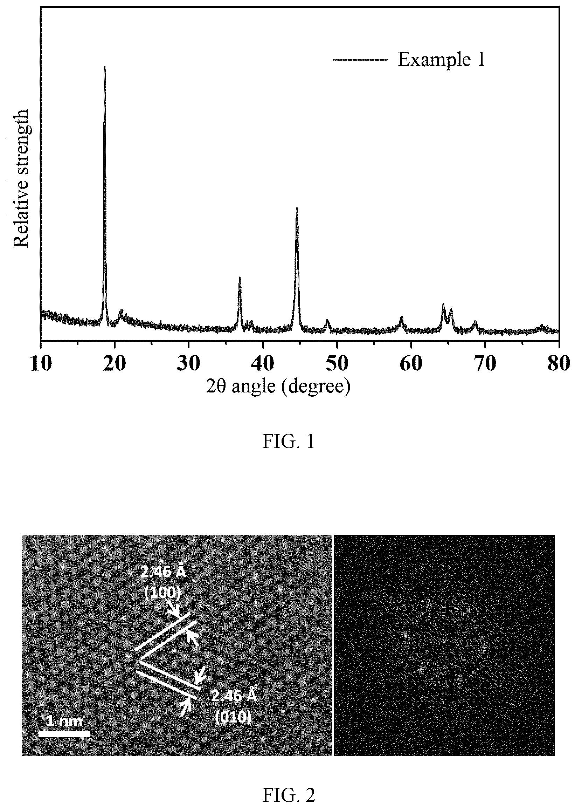

The lithium-rich layered oxide material prepared in this example was characterized by X-ray diffraction (XRD). The results are shown in Figure 1. Figure 1 is an XRD pattern of the lithium-rich layered oxide material in Example 1 provided by the present disclosure. As can be seen from Figure 1, in addition to the weaker diffraction peaks of this material belonging to the monoclinic structure of the C2/m space point group between 20 degrees and 25 degrees, the other diffraction peaks could correspond to the hexagonal layered structure, indicating that the multi-component design did not change the bulk structural characteristics of the material.

The lithium-rich layered oxide material prepared in the example was characterized by high-resolution transmission electron microscopy (HRTEM), and a fast Fourier transform spectrum was drawn. The results are shown in Figure 2. Figure 2 is the HRTEM image and fast Fourier transform spectrum of the lithium-rich layered oxide material of Example 1 provided by the present disclosure. The left image is the HRTEM image and the right image is the fast Fourier transform image. It can be seen from Figure 2 that the interplanar spacing of the material was 0.47nm, which matched with the (003) crystal plane of the hexagonal phase and the (001) crystal plane of the monoclinic lithium-rich component; the fast Fourier transform diagram proved that the top exposed crystal plane of the material was the (003) crystal plane.

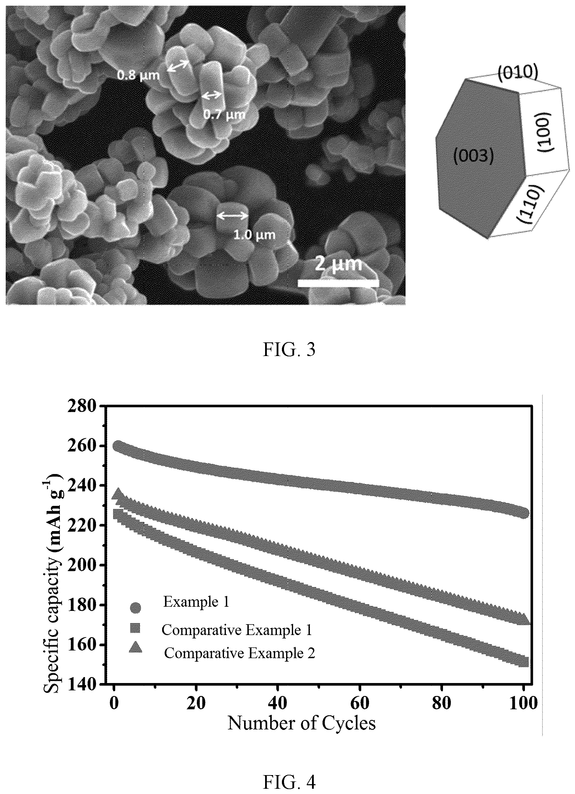

The lithium-rich layered oxide material prepared in the example was observed under a scanning electron microscope (SEM), and a structural schematic diagram of the primary particles was drawn. The results are shown in Figure 3. Figure 3 shows an SEM image of the lithium-rich layered material and a structural schematic diagram of the primary particle structure in Example 1 according to the present disclosure. The left image was the SEM image and the right image was the structure schematic diagram of the primary particles. As can be seen from the left image in Figure 3, the material was made up of polyhedrons with a diameter of about 1 $\mu$m. According to the right image in Figure 3, it can be seen that the top exposed crystal plane of the primary particle of the material was the {001} crystal plane, the side face was the {010} crystal plane, and the atoms on the {010} crystal plane were arranged in an open structure, which was conducive to the transport of lithium ions.

Example 2

Nickel chloride, cobalt chloride, and manganese chloride were weighed according to the molar ratio of Ni/Co/Mn of 25:15:60, and dissolved in deionized water to prepare 1.8 mol/L of a mixed salt solution A. A NaOH solution B with a concentration of 1.8 mol/L and an ammonia water complexing agent solution C with a concentration of 2.5 mol/L were prepared. Deionized water was added to the reaction kettle as a base liquid. The solutions A, B, and C were simultaneously pumped into the reaction kettle for the complexation and precipitation reaction. The flow speed of the NaOH solution and ammonia water complexing agent solution was controlled so that the pH of the mixed solution in the reaction kettle was always maintained within a range of 11.8±0.05. The stirring speed of the mixed solution in the reaction kettle was set to 600 r/min, and the reaction temperature was 50 °C. After reacting continuously for 36 hours, the obtained precipitate was discharged, washed with deionized water and dried at a drying temperature of 160 °C to obtain the manganese nickel cobalt hydroxide precursor P.

1000g of manganese nickel cobalt hydroxide precursor P, 550 g of lithium carbonate, 13.9 g of sodium carbonate and 27.1 g of zirconium dioxide were weighed, and mixed thoroughly using a high mixer to obtain mixture Q.

The above-mentioned mixture Q was placed in an oxygen atmosphere furnace for two-step calcining. The specific process was as follows. First, the furnace temperature was raised from room temperature to 500 °C at a heating rate of 2.5 °C/min, and the mixture Q was calcined at this temperature for 6 hours. During the process of heating and thermal insulation calcining, oxygen gas was continuously introduced into the furnace at a gas inlet rate of 3 m$^3$/h. Then, the furnace temperature was continued to be raised to 880 °C at a heating rate of 2.5 °C/min, and the mixture Q was calcined at this temperature for 10h. During the process of heating and thermal insulation calcining, oxygen gas was continuously introduced into the furnace at a gas inlet rate of 3m$^3$/h.

After the calcining was completed, the product was cooled in the furnace, and then pulverized and sieved to obtain the lithium-rich layered oxide material $Li(Li_{0.14}Na_{0.01}Ni_{0.20825}Co_{0.12495}Mn_{0.4998}Zr_{0.017}0)O_2$.

Example 3

Nickel chloride, cobalt chloride, and manganese chloride were weighed according to a molar ratio of Ni/Co/Mn of 25:15:60, and dissolved in deionized water to prepare 2.5 mol/L of a mixed salt solution A. A NaOH solution B with a concentration of 2 mol/L and an ethylenediamine complexing agent solution C with a concentration of 3 mol/L were prepared. Deionized water was added to the reaction kettle as a base liquid. The solutions A, B, and C were simultaneously pumped into the reaction kettle for the complexation and precipitation reaction. The flow speed of the NaOH solution and ethylenediamine complexing agent solution was controlled so that the pH of the mixed solution in the reaction kettle was always maintained within the range of 11.6±0.05. The stirring speed of the mixed solution in the reaction kettle was set to 500 r/min, and the reaction temperature was 60 °C. After reacting continuously for 40 hours, the obtained precipitate was discharged, washed with deionized water and dried at a drying temperature of 180 °C to obtain the manganese nickel cobalt hydroxide precursor P.

1000 g of manganese nickel cobalt hydroxide precursor P, 820 g of lithium sulfate, 11.0 g of sodium bicarbonate, 9.3 g of magnesium carbonate and 27.1 g of titanium dioxide were weighed, and mixed thoroughly using a high mixer to obtain a mixture Q.

The above-mentioned mixture Q was placed in an oxygen atmosphere furnace for two-step calcining. The specific process was as follows. First, a furnace temperature was raised from room temperature to 550 °C at a heating rate of 4 °C/min, and then the mixture Q was calcined at this temperature for 5 hours. During the process of heating and thermal insulation calcining, oxygen gas was continuously introduced into the furnace at a gas inlet rate of 5m³/h. Then, the furnace temperature was continued to be raised to 920 °C at a heating rate of 4 °C/min, and the mixture Q was calcined at this temperature for 12h. During the process of heating and thermal insulation calcining, oxygen gas was continuously introduced into the furnace at a gas inlet rate of 5m³/h.

After the calcining was completed, the product was cooled in the furnace, and then pulverized and sieved to obtain the lithium-rich layered oxide material $Li(Li_{0.14}Na_{0.01}Ni_{0.206125}Co_{0.123675}Mn_{0.4947}Mg_{0.0085}Ti_{0.017})O_2$.

Example 4

Nickel sulfate, cobalt chloride, and manganese sulfate were weighed according to a molar ratio of Ni/Co/Mn of 25:25:50, and dissolved in a deionized water to prepare 3 mol/L of a mixed salt solution A. A NaOH solution B with a concentration of 2.5 mol/L and an EDTA complexing agent solution C with a concentration of 2 mol/L were prepared. Deionized water was added to the reaction kettle as a base liquid. The solutions A, B, and C were simultaneously pumped into the reaction kettle for the complexation and precipitation reaction. The flow speed of NaOH solution and an EDTA complexing agent solution was controlled so that the pH of the mixed solution in the reaction kettle was always maintained within the range of 12.0±0.05. The stirring speed of the mixed solution in the reaction kettle was set to 600r/min, and the reaction temperature was 65 °C. After reacting continuously for 45 hours, the obtained precipitate was discharged, washed with deionized water and dried at a drying temperature of 160 °C to obtain the manganese nickel cobalt hydroxide precursor P.

1000 g of manganese nickel cobalt hydroxide precursor P, 580 g of lithium carbonate, 11.0 g of sodium bicarbonate, 8.9 g of titanium dioxide and 13.5g of zirconium dioxide were weighed, and mixed thoroughly using a high mixer to obtain a mixture Q.

The above-mentioned mixture Q was placed in an air atmosphere furnace for two-step calcining. The specific process was as follows. First, the furnace temperature was raised from room temperature to 600 °C at a heating rate of 2 °C/min, and the mixture Q was calcined at this temperature for 4 hours. During the process of heating and thermal insulation calcining, air was continuously introduced into the furnace at an air inlet rate of 3m³/h. Then, the furnace temperature was continued to be raised to 950 °C at a heating rate of 2 °C/min, and the mixture Q was calcined at this temperature for 10 h. During the process of heating and thermal insulation calcining, air was continuously introduced into the furnace at an air inlet rate of 3m³/h.

After the calcining was completed, the product was cooled in the furnace, and then pulverized and sieved to obtain the lithium-rich layered oxide material $Li(Li_{0.19}Na_{0.01}Ni_{0.20825}Co_{0.20825}Mn_{0.4165}Ti_{0.0085}Zr_{0.0085})O_2$.

Example 5

Nickel chloride, cobalt sulfate, and manganese chloride were weighed according to a molar ratio of Ni/Co/Mn of 25:25:50, and dissolved in a deionized water to prepare 1.5 mol/L of a mixed salt solution A. A NaOH solution B with a concentration of 1 mol/L and an ammonia water complexing agent solution C with a concentration of 2 mol/L were prepared. Deionized water was added as the base liquid to the reaction kettle. The solutions A, B, and C were simultaneously pumped into the reaction kettle for the complexation and precipitation reaction. The flow speed of the NaOH solution and the ammonia water complexing agent solution were controlled so that the pH of the mixed solution in the reaction kettle was always maintained within a range of 12.5±0.05. The stirring speed of the mixed solution in the reaction kettle was set to 800 r/min, and the reaction temperature was 60 °C. After reacting continuously for 40 hours, the obtained precipitate was discharged, washed with deionized water and dried at a drying temperature of 150 °C to obtain the manganese nickel cobalt hydroxide precursor P.

1000g of manganese nickel cobalt hydroxide precursor P, 570g of lithium hydroxide, 10.4g of sodium bicarbonate, 29.5g of niobium pentoxide and 16.2g of molybdenum trioxide were weighed, and mixed thoroughly using a high mixer to obtain a mixture Q.

The above-mentioned mixture Q was placed in an oxygen atmosphere furnace for two-step calcining. The specific process was as follows. First, the furnace temperature was raised from room temperature to 600 °C at a heating rate of 4 °C/min, and the mixture Q was calcined at this temperature for 3 hours. During the process of heating and thermal insulation calcining, oxygen gas was continuously introduced into the furnace at a gas inlet rate of 2m³/h. Then, the furnace temperature was continued to be raised to 980 °C at a heating rate of 4 °C/min, and the mixture Q was calcined at this temperature for 15h. During the process of heating and thermal insulation calcining, oxygen gas was continuously introduced into the furnace at a gas inlet rate of 2m³/h.

After the calcining was completed, the product was cooled in the furnace, then pulverized and sieved to obtain the lithium-rich layered oxide material $Li(Li_{0.09}Na_{0.01}Ni_{0.2205}Co_{0.2205}Mn_{0.441}Nb_{0.009}Mo_{0.009})O_2$.

Example 6

Nickel chloride, cobalt sulfate, and manganese chloride were weighed according to a molar ratio of Ni/Co/Mn of 20:20:60, and dissolved in deionized water to prepare 2.5 mol/L of a mixed salt solution A. A NaOH solution B with a concentration of 1.5 mol/L and an ethylenediamine complexing agent solution C with a concentration of 5 mol/L were prepared. Deionized water was added as the base liquid to the reaction kettle. The solutions A, B, and C were simultaneously pumped into the reaction kettle for the complexation and precipitation reaction. The flow speed of NaOH solution and ethylenediamine complexing agent solution was controlled so that the pH of the mixed solution in the reaction kettle was always maintained within the range of 11.3±0.05. The stirring speed of the mixed solution in the reaction kettle was set to 600 r/min, and the reaction temperature was 55 °C. After reacting continuously for 50 hours, the obtained precipitate was discharged, washed with deionized water and dried at a drying temperature of 160 °C to obtain the manganese nickel cobalt hydroxide precursor P.

1000g of manganese nickel cobalt hydroxide precursor P, 670g of lithium hydroxide, 29.4g of sodium carbonate, 13.5g of zirconium dioxide and 8.9g of titanium dioxide were weighed, and mixed thoroughly using a high mixer to obtain a mixture Q.

The above-mentioned mixture Q was placed in an air atmosphere furnace for two-step calcining. The specific process was as follows. First, the furnace temperature was raised from room temperature to 550 °C at a heating rate of 3 °C/min, and the mixture Q was calcined at this temperature for 6 hours. During the process of heating and thermal insulation calcining, air was continuously introduced into the furnace at an air inlet rate of 3 $m^3$/h. Then, the furnace temperature was continued to be raised to 960 °C at a heating rate of 3 °C/min, and the mixture Q was calcined at this temperature for 12 h. During the process of heating and thermal insulation calcining, air was continuously introduced into the furnace at an air inlet rate of 3$m^3$/h.

After the calcining was completed, the product was cooled in the furnace, then pulverized and sieved to obtain the lithium-rich layered oxide material $Li(Li_{0.18}Na_{0.02}Ni_{0.1568}Co_{0.1568}Mn_{0.4704}Zr_{0.008}Ti_{0.008})O_2$.

Example 7

Nickel chloride, cobalt sulfate, and manganese chloride were weighed according to a molar ratio of Ni/Co/Mn of 20:20:60, and dissolved in a deionized water to prepare 1.8 mol/L of a mixed salt solution A. A NaOH solution B with a concentration of 2.5 mol/L and an EDTA complexing agent solution C with a concentration of 1 mol/L were prepared. Deionized water was added as the base liquid to the reaction kettle. The solutions A, B, and C were simultaneously pumped into the reaction kettle for the complexation and precipitation reaction. The flow speed of NaOH solution and EDTA complexing agent solution was controlled so that the pH of the mixed solution in the reaction kettle was always maintained within the range of 12.8±0.05. The stirring speed of the mixed solution in the reaction kettle was set to 750 r/min, and the reaction temperature was 56 °C. After reacting continuously for 42 hours, the precipitate was discharged, washed with deionized water and dried at a drying temperature of 160 °C to obtain the manganese nickel cobalt hydroxide precursor P.

1000g of manganese nickel cobalt hydroxide precursor P, 555g of lithium carbonate, 13.9g of sodium carbonate, 11.3g of aluminum oxide and 27.1g of zirconium dioxide were weighed, and mixed thoroughly using a high mixer to obtain a mixture Q.

The above-mentioned mixture Q was placed in an oxygen atmosphere furnace for two-step calcining. The specific process was as follows. First, the furnace temperature was raised from room temperature to 580 °C at a heating rate of 3 °C/min, and the mixture Q was calcined at this temperature for 6 hours. During the process of heating and thermal insulation calcining, oxygen gas was continuously introduced into the furnace at a gas inlet rate of 5$m^3$/h. Then, the furnace temperature was continued to be raised to 920 °C at a heating rate of 3 °C/min, and the mixture Q was calcined at this temperature for 18 h. During the process of heating and thermal insulation calcining, oxygen gas was continuously introduced into the furnace at a gas inlet rate of 5$m^3$/h.

After the calcining was completed, the product was cooled in the furnace, then pulverized and sieved to obtain the lithium-rich layered oxide material $Li(Li_{0.14}Na_{0.01}Ni_{0.1649}Co_{0.1649}Mn_{0.4947}Al_{0.0085}Zr_{0.017})O_2$.

Comparative Example 1

Nickel sulfate, cobalt sulfate, and manganese sulfate were weighed according to a molar ratio of Ni/Co/Mn of 20:10:70, and dissolved in a deionized water to prepare 2mol/L of a mixed salt solution A. A NaOH solution B with a concentration of 2mol/L and an ammonia water complexing agent solution C with a concentration of 2 mol/L were prepared. Deionized water was added to the reaction kettle as the base liquid. The solutions A, B, and C were simultaneously pumped into the reaction kettle for the complexation and precipitation reaction. The flow speed of the NaOH alkali solution and the ammonia water complexing agent solution was controlled so that the pH of the mixed solution in the reaction kettle was always maintained within the range of 11.5±0.05. The stirring speed of the mixed solution in the reaction kettle was set to 400 r/min, and the reaction temperature was 55 °C. After reacting continuously for 36 hours, the obtained precipitate was discharged, washed with deionized water and dried at a drying temperature of 150 °C to obtain the manganese nickel cobalt hydroxide precursor P.

1000g of manganese nickel cobalt hydroxide precursor P and 620g of lithium carbonate were weighed, and mixed thoroughly using a high mixer to obtain a mixture Q.

The above-mentioned mixture Q was placed in an air atmosphere furnace for two-step calcination. The specific process was as follows. First, the furnace temperature was raised from room temperature to 550 °C at a heating rate of 3 °C/min, and the mixture Q was calcined at this temperature for 4 hours. During the process of heating and thermal insulation calcining, air was continuously introduced into the furnace at an air inlet rate is $2.5 m^3/h$. Then, the furnace temperature was continued to be heated to 900 °C at a heating rate of 3 °C/min, and the mixture Q was calcined at this temperature for 12 h. During the process of heating and thermal insulation calcining, air was continuously introduced into the furnace at an air inlet rate of 2.5 $m^3$/h.

After the calcining was completed, the product was cooled in the furnace, then pulverized and sieved to obtain the lithium-rich layered oxide material $Li(Li_{0.2}Ni_{0.16}Co_{0.08}Mn_{0.56})O_2$.

Comparative Example 2

620 g of lithium carbonate, 55.8 g of trimanganese tetraoxide, 195.6 g of nickel hydroxide, 98.9 g of cobalt hydroxide, 29.4 g of sodium carbonate, 11.3 g of aluminum oxide and 17.8 g of titanium dioxide were weighed. The above raw materials were added into 1000 mL of deionized water, stirred and mixed evenly to obtain a mixture A.

The mixture A was pumped into a spray drying equipment through a peristaltic pump. The inlet rate of the liquid was set to 0.8 L/min. The air inlet temperature of the spray drying was set to 250 °C, and the air outlet temperature was set to 120 °C. The carrier gas rate was set to 50 L/min, and the liquid in the mixture evaporated at high temperature to obtain a powder B in which metal ions were evenly mixed.

The above-mentioned powder B was placed in an air atmosphere furnace for two-step calcining. The specific process was as follows. First, the furnace temperature was raised from room temperature to 550 °C at a heating rate of 3 °C/min, and the powder B was calcined at this temperature for 4 hours. During the process of heating and thermal insulation calcining, air was continuously introduced into the furnace at an air inlet rate of 2.5 $m^3$/h. Then, the furnace temperature was continued to be raised to 900 °C at a heating rate of 3 °C/min, and the powder B was calcined at this temperature for 12 h. During the process of heating and thermal insulation calcining, air was continuously introduced into the furnace at an air inlet rate of 2.5 $m^3$/h.

After the calcining was completed, the product was cooled in the furnace, then pulverized and sieved to obtain the lithium-rich layered oxide material $Li(Li_{0.18}Na_{0.02}Ni_{0.1552}Co_{0.0776}Mn_{0.5432}Al_{0.008}Ti_{0.016})O_2$.

Performance evaluation

The configurational entropy of the oxide materials prepared in Examples 1 to 7 and Comparative Examples 1 to 2 was calculated using formula (1), and the ratio of the exposed area of {010} crystal plane in the above materials was calculated using SEM images. The results are shown in Table 1.

Table 1

|  | Configurational entropy ($S_{config}$) | Ratio of exposed area of {010} crystal plane |
|---|---|---|
| Example 1 | 6.71 | 36.4% |
| Example 2 | 7.48 | 37.2% |
| Example 3 | 7.80 | 37.5% |
| Example 4 | 7.80 | 37.4% |
| Example 5 | 8.85 | 38.3% |
| Example 6 | 7.45 | 37.0% |
| Example 7 | 7.89 | 37.5% |
| Comparative Example 1 | 5.00 | 12.2% |

(continued)

|  | Configurational entropy ($S_{config}$) | Ratio of exposed area of {010} crystal plane |
|---|---|---|
| Comparative Example 2 | 6.71 | 17.6% |

The electrochemical properties of the oxide materials prepared in Examples 1 to 7 and Comparative Examples 1 to 2 were tested in button-type lithium secondary batteries when used as cathode materials for lithium secondary batteries. The specific method for preparing the lithium secondary batteries and the positive electrode plates thereof was as follows. The prepared cathode material powder was mixed with acetylene black and polyvinylidene fluoride according to a mass ratio of 90:5:5, and an appropriate amount of N-methylpyrrolidone was added as a dispersant, and the mixture was ground into a slurry. Then, the slurry was coated evenly on the aluminum foil, and vacuum dried at 120 °C for 10 hours. The dried electrode plate was rolled by a roller machine. The aluminum foil was cut into a circular electrode plate with a diameter of 1.3 cm by a slicer. The loading capacity of the active material was controlled at about 10mg/cm$^2$. A half-cell was assembled in an argon atmosphere glove box with a partial pressure of water of ≤0.1ppm and a partial pressure of oxygen of ≤0.1ppm. Metallic lithium was used as a counter electrode, and 1M LiPF$_6$ (FEC/EC/DMC, the volume ratio was 1:1:1) solution was used as an electrolyte, to assemble a CR2032 button battery. By a constant current charging and discharging mode, charging and discharging were performed at room temperature at a voltage of 2.0V to 4.65V and a current density of 50mA/g (0.2C rate) for 100 cycles. The lithium ion diffusion coefficients of different materials were compared through electrochemical impedance EIS test at a frequency range of 100kHz to 0.01Hz. The current density in the battery rate performance test was 50mA/g, 500mA/g, 1250mA/g, and 2500mA/g, corresponding to 0.2C, 2C, 5C, and 10C respectively.

The test results of the cycle performance of the oxide materials prepared in Example 1 and Comparative Examples 1 to 2 in the lithium secondary battery test are shown in Figure 4. Figure 4 shows a comparison chart of the cycle performance of the oxide materials prepared in Example 1, Comparative Example 1 and Comparative Example 2 provided by the present disclosure in the lithium secondary battery test. The data of the charge specific capacity in the first cycle, the discharge specific capacity in the first cycle, the Coulombic efficiency in the first cycle, capacity retention rate after 100 cycles and lithium ion diffusion coefficient of the oxide materials prepared in Examples 1 to 7 and Comparative Examples 1 to 2 in the lithium secondary battery test are shown in Table 2.

Table 2

|  | Charge specific capacity in the first cycle (mAh/g) | Discharge specific capacity in the first cycle (mAh/g) | Coulombic efficiency in the first cycle (%) | Capacity retention rate after 100 cycles (%) | Lithium ion diffusion coefficient (cm$^2$/s) |
|---|---|---|---|---|---|
| Example 1 | 286.6 | 259.9 | 90.7 | 87.0 | $4.2\times10^{-11}$ |
| Example 2 | 281.9 | 251.2 | 89.1 | 88.8 | $4.6\times10^{-11}$ |
| Example 3 | 282.8 | 255.9 | 90.5 | 82.8 | $3.5\times10^{-11}$ |
| Example 4 | 300.5 | 267.7 | 89.1 | 88.1 | $1.3\times10^{-11}$ |
| Example 5 | 274.2 | 246.8 | 90 | 92.3 | $8.4\times10^{-11}$ |
| Example 6 | 280.4 | 254.9 | 90.9 | 87.8 | $2.8\times10^{-11}$ |
| Example 7 | 285.3 | 256.5 | 89.9 | 88.8 | $6.5\times10^{-11}$ |
| Comparative Example 1 | 292.3 | 225.6 | 77.2 | 67.1 | $4.2\times10^{-13}$ |
| Comparative Example 2 | 283.4 | 235.1 | 83.0 | 73.2 | $8.0\times10^{-12}$ |

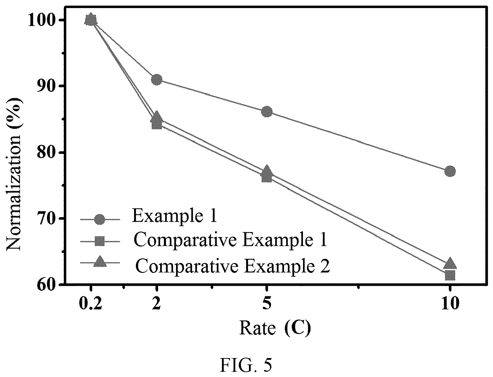

The test results of the rate performance of the oxide materials prepared in Example 1 and Comparative Examples 1 to 2 in the lithium secondary battery test are shown in Figure 5. Figure 5 shows a comparison chart of the rate performance of the oxide materials prepared in Example 1, Comparative Example 1 and Comparative Example 2 provided by the present disclosure in the lithium secondary battery test. The data of the rate performance of the oxide materials prepared in Examples 1 to 7 and Comparative Examples 1 to 2 in the lithium secondary battery test are as shown in the table 3.

Table 3

| | 0.2 C discharge specific capacity (mAh/g) | 2 C discharge specific capacity (mAh/g) | 5 C discharge specific capacity (mAh/g) | 10 C discharge specific capacity (mAh/g) |
|---|---|---|---|---|
| Example 1 | 259.5 | 236.1 | 223.6 | 200.2 |
| Example 2 | 250.2 | 222.3 | 215.9 | 193.2 |
| Example 3 | 256 | 231.7 | 221.2 | 198.6 |
| Example 4 | 265.7 | 243.4 | 230.9 | 204.5 |
| Example 5 | 248.7 | 227.5 | 213.4 | 190.1 |
| Example 6 | 256.9 | 231.2 | 223.6 | 195.8 |
| Example 7 | 258 | 228.7 | 224.4 | 202.5 |
| Comparative Example 1 | 225.5 | 190.1 | 172 | 138.5 |
| Comparative Example 2 | 233.8 | 199.2 | 180.1 | 147.4 |

By comparing and analyzing Tables 1 to 3 and Figures 4 to 5, it can be seen that: 1) the configurational entropy value of the oxide materials prepared in Examples 1 to 7 and Comparative Example 1 was positively correlated with the exposed ratio of the {010} crystal plane; 2) although the design of multiple cationic components with a high entropy was introduced in Comparative Example 2 and the configurational entropy was the same as that of Example 1, due to the spray drying process, compared with the process of preparing the precursor through the co-precipitation reaction and then performing lithium mixing and calcination in Example 1, the resistance to the adjustment and control of the crystal plane was greater, thereby failing to achieve large area exposure of the {010} crystal plane; 3) the lithium secondary batteries using the oxide materials prepared in Examples 1 to 7 as the cathode materials exhibited a higher diffusion rate of lithium ion, and the capacity retention rate after 100 cycles was significantly higher than that of Comparative Examples 1 to 2; 4) the lithium secondary batteries using the oxide materials prepared in Examples 1 to 7 as the cathode materials had a discharge capacity retention rate (10C discharge capacity/0.2C discharge capacity) at a high rate of 10C much higher than that of Comparative Examples 1 to 2.

The above are only the preferred embodiments of the present disclosure. It should be pointed out that those skilled in the art can also make several improvements and modifications without departing from the principles of the present disclosure. These improvements and modifications should be also regarded as the protection scope of the present disclosure.

**Claims**

1. A lithium-rich layered oxide material, wherein primary particles of the lithium-rich layered oxide material are polyhedrons with an exposed {010} crystal plane, and an area of the {010} crystal plane accounts for > 20%.

2. The lithium-rich layered oxide material according to claim 1, wherein the area of the {010} crystal accounts for 30% to 45%.

3. The lithium-rich layered oxide material according to claim 1, wherein the lithium-rich layered oxide material has a configurational entropy value of 6.0 to 9.0.

4. The lithium-rich layered oxide material according to any one of claims 1 to 3, wherein the lithium-rich layered oxide material has a chemical formula of $Li(Li_aNa_bMn_cNi_dCo_eM_f)O_2$, wherein M is one or more of Mg, B, Al, Ti, Zr, Nb, Mo and W, $0< a\leq0.3$, $0<b\leq0.05$, $0.4<c\leq0.7$, $d>0$, $e>0$, $f>0$, and $a+b+c+d+e+f=1$.

5. A method for preparing a lithium-rich layered oxide material, comprising the following steps:

preparing a manganese nickel cobalt hydroxide precursor, mixing the manganese nickel cobalt hydroxide precursor, a lithium source compound, a sodium source compound and an M source compound, and calcining the mixture under an oxygen condition, to obtain a lithium-rich layered oxide material;

M in the M source compound is one or more of Mg, B, Al, Ti, Zr, Nb, Mo and W;

primary particles of the lithium-rich layered oxide material are polyhedrons with an exposed {010} crystal plane, and an area of the {010} crystal plane accounts for >20%.

6. The method according to claim 5, wherein the specific steps of preparing the manganese nickel cobalt hydroxide precursor comprises:

a) mixing a soluble salt of manganese, a soluble salt of nickel, a soluble salt of cobalt and a water, to obtain a mixed salt solution;

b) mixing the mixed salt solution, a sodium hydroxide and a complexing agent, and controlling the amounts of the sodium hydroxide and the complexing agent to maintain the pH value of the mixed system at 10 to 13, to perform a complexation and precipitation reaction, to obtain a precipitate; and

c) washing and drying the precipitate to obtain the manganese nickel cobalt hydroxide precursor.

7. The method according to claim 6, wherein the specific steps satisfy at least one of the following conditions:

the soluble salt of manganese is one or more of manganese sulfate, manganese chloride and manganese nitrate;

the soluble salt of nickel is one or more of nickel sulfate, nickel chloride and nickel nitrate;

the soluble salt of cobalt is one or more of cobalt sulfate, cobalt chloride and cobalt nitrate;

the complexing agent is one or more of ammonia water, ethylenediaminetetraacetic acid and ethylenediamine;

a total concentration of the metal ions in the mixed salt solution is 1 mol/L to 3mol/L;

the sodium hydroxide is mixed in the form of an aqueous solution of the sodium hydroxide, and a concentration of the aqueous solution of the sodium hydroxide is 0.5mol/L to 3mol/L;

the complexing agent is mixed in the form of an aqueous solution of the complexing agent, and a concentration of the aqueous solution of the complexing agent is 1 mol/L to 10mol/L;

a stirring rate of the complexation and precipitation reaction is 200 r/min- 800 r/min;

a temperature of the complexation and precipitation reaction is 30 °C to 70 °C; and

a duration of the complexation and precipitation reaction is 10 h to 50 h.

8. The method according to claim 5, wherein the lithium source compound is one or more of LiOH, $Li_2CO_3$, $Li_2SO_4$, LiCl and $LiNO_3$; the sodium source compound is $Na_2CO_3$ and/or $NaHCO_3$; the M source compound is one or more of oxide of M, hydroxide of M, carbonate of M and sulfate of M.

9. The method according to claim 5, wherein the calcining is a step-by-step calcining, comprising the following specific steps:

i) raising the temperature from an ambient temperature to a first calcining temperature and performing a first thermal insulation calcining;

the first calcining temperature is 300 °C to 600 °C; a heating rate to the first calcining temperature is 1 °C/min to 5 °C/min; a duration of the first thermal insulation calcining is 2 h to 8 h;

ii) continuing to raise the temperature to a second calcining temperature and performing a second thermal insulation calcining;

the second calcining temperature is 800 °C to 1000 °C; a heating rate to the second calcining temperature is 1 °C/min to 5 °C/min; a duration of the second thermal insulation calcining is 10 h to 20 h;

during the process of calcining, an oxygen-containing gas is continuously introduced into the used calcining equipment, an inlet rate of the oxygen-containing gas in step i) is 0.5 $m^3$/h to 5 $m^3$/h, and an inlet rate of the oxygen-containing gas in step ii) is 0.5 $m^3$/h to 5 $m^3$/h.

10. A lithium ion secondary battery, wherein a cathode material of the lithium ion secondary battery comprises a lithium-rich layered oxide material according to any one of claims 1 to 4 or a lithium-rich layered oxide material prepared by the preparation method according to any one of claims 5 to 9.

11. An electrical device, wherein the electrical device is equipped with the lithium ion secondary battery according to claim 10.

FIG. 1

FIG. 2

FIG. 3

FIG. 4

FIG. 5

**INTERNATIONAL SEARCH REPORT**

| International application No. |
| --- |
| **PCT/CN2023/112871** |

**A.    CLASSIFICATION OF SUBJECT MATTER**

H01M4/505(2010.01)i;  H01M4/525(2010.01)i;  C01D15/02(2006.01)i

According to International Patent Classification (IPC) or to both national classification and IPC

**B.    FIELDS SEARCHED**

Minimum documentation searched (classification system followed by classification symbols)

IPC:H01M,C01D

Documentation searched other than minimum documentation to the extent that such documents are included in the fields searched

Electronic data base consulted during the international search (name of data base and, where practicable, search terms used)

CNTXT, DPWI, VEN: 锂, 钴, 锰, 镍, 钠, 晶面, 010, 熵, 倍率性能, 循环稳定性, Li, Li+, Co+, Mn, Ni, Na, sodium, crystal w face, entropy, long w cycle w stability, rate w capability

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116387500 A (TIANJIN B&M SCIENCE AND TECHNOLOGY CO., LTD.) 04 July 2023 (2023-07-04)<br>claims 1-11 | 1-11 |
| X | WO 2022161090 A1 (GUANGDONG BRUNP RECYCLING TECHNOLOGY CO., LTD. et al.) 04 August 2022 (2022-08-04)<br>claims 1-10 | 1-11 |
| A | CN 105810934 A (BEIJING UNIVERSITY OF TECHNOLOGY) 27 July 2016 (2016-07-27)<br>claims 1-10 | 1-11 |
| A | CN 104466158 A (ZTE CORP.) 25 March 2015 (2015-03-25)<br>description, paragraphs 5-33 | 1-11 |
| A | CN 102694165 A (TIANJIN UNIVERSITY OF TECHNOLOGY) 26 September 2012 (2012-09-26)<br>embodiments 1-6 | 1-11 |
| A | US 11198621 B2 (BEIJING UNIVERSITY OF TECHNOLOGY) 14 December 2021 (2021-12-14)<br>claims 1-8 | 1-11 |

☑ Further documents are listed in the continuation of Box C.     ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **10 October 2023** | **18 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/112871** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2022371911 A1 (BEIJING EASPRING MATERIAL TECHNOLOGY CO., LTD.) 24 November 2022 (2022-11-24)<br>embodiments 1-7 | 1-11 |
| A | US 10446830 B2 (SICHUAN FUHUA NEW ENERGY HIGH-TECH CO., LTD.) 15 October 2019 (2019-10-15)<br>description, paragraphs 6-27 | 1-11 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 116387500 | A | 04 July 2023 | | None | | |
| WO | 2022161090 | A1 | 04 August 2022 | GB | 202310079 | D0 | 16 August 2023 |
| | | | | HU | 2200279 | A1 | 28 November 2022 |
| | | | | DE | 112021005597 | T5 | 03 August 2023 |
| CN | 105810934 | A | 27 July 2016 | CN | 105810934 | B | 05 July 2019 |
| CN | 104466158 | A | 25 March 2015 | WO | 2015039490 | A1 | 26 March 2015 |
| CN | 102694165 | A | 26 September 2012 | | None | | |
| US | 11198621 | B2 | 14 December 2021 | WO | 2019075910 | A1 | 25 April 2019 |
| | | | | US | 2021221702 | A1 | 22 July 2021 |
| US | 2022371911 | A1 | 24 November 2022 | JP | 2022545571 | A | 27 October 2022 |
| | | | | JP | 7204049 | B2 | 13 January 2023 |
| | | | | WO | 2021175233 | A1 | 10 September 2021 |
| | | | | KR | 20220061231 | A | 12 May 2022 |
| | | | | KR | 102477330 | B1 | 13 December 2022 |
| | | | | EP | 4047688 | A1 | 24 August 2022 |
| US | 10446830 | B2 | 15 October 2019 | US | 2018183045 | A1 | 28 June 2018 |
| | | | | CN | 106532029 | A | 22 March 2017 |

Form PCT/ISA/210 (patent family annex) (July 2022)

**EP 4 411 886 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211638986